# EUROPÄISCHE PATENTSCHRIFT

(11) **EP 1 772 726 B1**
(45) Veröffentlichungstag und Bekanntmachung des Hinweises auf die Patenterteilung: **30.11.2011**
(21) Anmeldenummer: 06021081.2
(22) Anmeldetag: 06.10.2006
(51) Int. Cl.: G01N 21/64, G02B 21/00

(54) **Mikroskopiesystem und Aufnahmeverfahren zur Sichtbarmachung einer Fluoreszenz**
Microscopy system for visualising a fluorescence
Système de microscope pour visualiser une fluorescence

(30) Priorität: 06.10.2005 DE 102005048006
(43) Veröffentlichungstag der Anmeldung: 11.04.2007
(73) Patentinhaber: Carl Zeiss Meditec AG, 07745 Jena (DE)
(72) Erfinder: Jess, Helge, 73447 Oberkochen (DE); Weinschenk, Petra, 73433 Aalen (DE); Schneider, Martin, 89551 Königsbronn (DE); Hauger, Christoph, Dr., 73431 Aalen (DE); Miesner, Hans-Joachim, Dr., 73434 Aalen (DE)
(74) Vertreter: Diehl & Partner GbR

(56) Entgegenhaltungen:
- EP-A2- 0 400 605
- DE-A1- 10 339 784
- DE-A1- 19 809 727
- US-A- 5 614 948

## Beschreibung

Die Erfindung betrifft ein Mikroskopiesystem und ein Aufnahmeverfahren zur Sichtbarmachung einer Fluoreszenz.

Fluoreszenzfarbstoffe werden in der Medizin und der Biologie für verschiedene Zwecke eingesetzt, wie beispielsweise zur Sichtbarmachung von bestimmten Gewebearten, Gewebestrukturen, Gewebefunktionen usw. Hierbei wird einer zu untersuchenden Gewebeprobe oder einem zu untersuchenden Patienten Fluoreszenzfarbstoff oder ein Vorläufer eines solchen Fluoreszenzfarbstoffs verabreicht. Der Farbstoff reichert sich in bestimmten Gewebearten bzw. Gewebestrukturen der Gewebeprobe oder des Patienten an, und durch Beobachtung des Fluoreszenzlichts können diese Gewebestrukturen bzw. Gewebearten sichtbar gemacht und von einem Beobachter lokalisiert werden. Hierzu werden weiter spezielle optische Hilfsmittel eingesetzt, um das unter Umständen schwache Fluoreszenzlicht für den Beobachter gut sichtbar zu machen.

Ein herkömmliches Mikroskopiesystem und Aufnahmeverfahren ist aus der deutschen Offenlegungsschrift DE 103 39 784 A1 bekannt. Mit diesem bekannten System ist es möglich, nach dem Verabreichen des Fluoreszenzfarbstoffs bzw. dessen Vorläufers die entstehende Fluoreszenz zu beobachten und entsprechende Bilder aufzunehmen, zu archivieren und als Film wiederzugeben.

Ein Problem bei dem herkömmlichen System liegt darin, daß bei manchen Untersuchungen die aufgenommenen Bilder eine zu geringe Qualität, wie beispielsweise eine geringe Helligkeit oder einen schwachen Kontrast, zeigen und gelegentlich eine signifikante Fluoreszenz in den aufgenommenen Bildern nicht erkennbar ist. Eine Untersuchung muß dann gegebenenfalls mit einer höheren Konzentration an Fluoreszenzfarbstoff und anderen Beobachtungsbedingungen wiederholt werden, um ein gewünschtes Ziel zu erreichen.

DE 198 09 727 offenbart ein Fluoreszenz-Endoskop mit einen CCD-Sensor und einem Verstärker für das CCD-Signal, dessen Verstärkungsfaktor automatisch geregelt wird. Eine Steuerung erhöht oder erniedrigt die Verstärkung, wenn die Amplitude des CCD-Signals bestimmte Werte unter- bzw. überschreitet. US 5 614 948 und EP 0 400 605 offenbaren Steuerungen für CCD-Kameras, die die durch einen A/D-Wandler generierten Binärzahlen auswerten, und die Verstärkung so regeln, daß das mittlere Bildsignal in einem bestimmten Bereich liegt, oder daß die Pixel mit maximaler Helligkeit eine bestimmte Anzahl nicht überschreiten.

Es ist eine Aufgabe der vorliegenden Erfindung, ein Mikroskopiesystem und ein Aufnahmeverfahren zur Sichtbarmachung einer Fluoreszenz vorzuschlagen, bei welchem eine auftretende Fluoreszenz mit besserer Wahrnehmbarkeit darstellbar ist.

Gemäß Ausführungsformen der Erfindung wird hierzu ein Bildsensor und eine Ausleseelektronik für den Bildsensor eingesetzt. Der Bildsensor umfaßt eine Mehrzahl von Pixeln zur Akkumulation von durch einfallende Strahlung erzeugter Ladung, und die Ausleseelektronik wandelt die in den Pixeln akkumulierte Ladung in Binärzahlen um. Hierbei ist ein Gain der Ausleseelektronik einstellbar. Zu Beginn einer Untersuchung wird der Gain auf einen geeigneten Maximalwert eingestellt. Wird während der Untersuchung festgestellt, daß ein oder mehrere Helligkeitswerte eines aufgenommenen Bildes einen geeignet gewählten maximalen Helligkeitswert überschreiten, so wird der Gain reduziert.

Durch die Einstellung des Gain noch vor der Messung auf einen Maximalwert ist sichergestellt, daß auch eine besonders schwache Fluoreszenz im Rahmen der zur Verfügung stehenden Möglichkeiten zu einem signifikanten Bildsignal führt. Nach dem Applizieren des Fluoreszenzfarbstoffes bzw. dessen Vorläufers wird die Bildhelligkeit des Fluoreszenzbildes kontinuierlich zunehmen. Hierbei ist es dann möglich, daß aufgrund des zu Beginn groß eingestellten Gains einige Helligkeitswerte den maximalen Helligkeitswert, einen noch größeren Helligkeitswert oder einen Überlaufwert repräsentieren. Dem wird dadurch entgegengewirkt, daß der Wert des Gains kontinuierlich reduziert wird, so daß auch weiterhin Bilder mit guter Kontrastmodulation aufgenommen werden und die Bereiche des Bildes, in denen Helligkeitswerte den Maximalwert oder einen Überlaufwert repräsentieren klein bleiben. Somit erfolgt durch die kontinuierliche Reduzierung des Gains eine optimale Aufnahme von Bildern der zunehmend stärker werdenden Fluoreszenzerscheinung, wobei bereits zu Beginn der Fluoreszenzerscheinung, wo die detektierbaren Fluoreszenzintensitäten gering sind, bereits kontrastreiche Bilder aufgenommen werden.

Gemäß einer Ausführungsform der Erfindung ist ein Aufnahmeverfahren für eine Reihe von Fluoreszenzbildern unter Verwendung eines Kamerasystems vorgesehen, wobei das Kamerasystem einen Bildsensor mit einer Mehrzahl von Pixeln zur Akkumulation von durch einfallende Strahlung erzeugter Ladung, und eine Ausleseelektronik zur Umwandlung einer in jeweils Gruppen von Pixeln akkumulierter Ladungsmenge in Binärzahlen umfaßt, wobei wenigstens ein Gain der Umwandlung einstellbar ist, so daß die Binärzahlen jeweils Ladungsmengen aus Ladungsmengen-Bereichen repräsentieren, deren Ladungsmengen kleiner sind als eine von dem wenigstens einen Gain abhängige Grenzladungsmenge; und wobei das Verfahren umfaßt: Einstellen des wenigstens einen Gain derart, daß die Grenzladungsmenge eine kleine erste Ladungsmenge ist, und wobei das Verfahren sodann wiederholt umfaßt: Empfangen von Binärzahlen, welche ein durch den Bildsensor detektiertes Bild repräsentieren, von der Ausleseelektronik, Neu-Einstellen des wenigstens einen Gain derart, daß die Grenzladungsmenge größer ist als bei der vorangehenden Einstellung des wenigstens einen Gain, falls wenigstens eine der das detektierte Bild repräsentierenden Binärzahlen eine Ladungsmenge repräsentiert, welche einen Maximalwert überschreitet.

In der Regel repräsentieren die Binärzahlen jeweils die den einzelnen Pixeln des Bildsensors zugeordneten detektierten Helligkeitswerte. In einem aus den Binärzahlen erzeugten dargestellten Bild erscheinen dann solche Bereiche hell, welche Pixelbereichen des Bildsensors entsprechen, auf welche viel Strahlung einfällt, während Pixelbereiche des Bildsensors, auf welche wenig Strahlung einfällt, in dem dargestellten Bild dann dunkel erscheinen. Es ist jedoch auch möglich, daß die Binärzahlen die in den Pixeln erzeugten Ladungsmengen anders kodieren. Beispielsweise ist es möglich, daß die Binärzahlen die Helligkeiten invers kodieren, so daß Pixelbereiche mit hoher einfallender Strahlungsintensität in den entsprechenden Bereichen des erzeugten dargestellten Bildes dunkel erscheinen, während in dem dargestellten Bild Bereiche hell erscheinen, welchen Pixelbereiche des Bildsensors zugeordnet sind, auf welche wenig Strahlung einfällt.

Die Ausleseelektronik wandelt die in einer Gruppe von Pixeln akkumulierte Ladungsmenge in die Vielzahl von Binärzahlen derart um, daß einer jeden Binärzahl ein Ladungsmengenbereich zugeordnet ist, wobei die paarweise verschiedenen Binärzahlen zugeordneten Ladungsmengenbereiche miteinander im wesentlichen nicht überlappen. Hierbei sind die Ladungsmengen aus den in Binärzahlen umgewandelten Ladungsmengenbereichen kleiner als eine Grenzladungsmenge. Eine in einer Gruppe von Pixeln akkumulierte Ladungsmenge, welche größer ist als die Grenzladungsmenge, wird in eine spezielle Binärzahl umgewandelt, welche auch einen Überlauf repräsentieren kann. Beispielsweise können die Ladungsmengen in Acht-Bit-Binärzahlen von 0 bis 254 umgewandelt werden, und die Binärzahl 255 repräsentiert dann den Überlauf bzw. eine Ladungsmenge, welche größer ist als die Grenzladungsmenge.

Die Grenzladungsmenge ist durch den einstellbaren Gain bestimmt.

Der Bildsensor kann beispielsweise ein CCD-Sensor sein, bei welchem in den einzelnen Pixeln akkumulierte Ladungen in Reihenrichtung seriell aus dem Sensor herausgeschoben werden, die Ladungsmengen einer jeden Zeile seriell in Spannungen umgewandelt werden, diese Spannungen verstärkt werden, und die verstärkten Spannungen mittels eines Analog-Digital-Wandlers in Binärzahlen umgewandelt werden. Das Verstärken der Spannungen erfolgt mit einem Spannungsverstärker, dessen Gain einstellbar sein kann. Ebenso kann ein Gain des Analog-Digital-Wandlers einstellbar sein.

Der Bildsensor kann auch einen CMOS-Sensor umfassen, bei welchem die Umwandlung der in einem Pixel akkumulierten Ladungsmenge in eine Spannung am Ort des Pixels selbst erfolgt, wobei die Spannungswerte der Pixel durch zeilen- und reihenweise Adressierung der Pixel ausgelesen und in Binärzahlen umgewandelt werden. Auch hier kann sowohl bei der Umwandlung der Ladungsmengen in Spannungen als auch bei einer Verstärkung dieser Spannungen und ebenso bei einer Umwandlung der verstärkten Spannungen in Binärzahlen jeweils ein Gain einstellbar sein.

Gemäß einer Ausführungsform der Erfindung werden empfangene Binärzahlen, welche ein durch den Bildsensor detektiertes Bild repräsentieren, in einem Aufzeichnungsmedium gespeichert.

Gemäß einer beispielhaften Ausführungsform hierbei erfolgt das Speichern in dem Aufzeichnungsmedium erst ab einem Startzeitpunkt, so daß mehrere Bilder, welche vor dem Startzeitpunkt detektiert wurden, nicht aufgezeichnet werden.

Alternativ hierzu sieht eine Ausführungsform vor, daß sämtliche detektierte Bilder in dem Aufzeichnungsmedium gespeichert werden und daß zusätzlich eine Markierung in dem Aufzeichnungsmedium gespeichert wird, welche ein aufgezeichnetes Bild bezeichnet, welches zu einem Zeitpunkt nahe dem Startzeitpunkt aufgezeichnet wurde.

Der Startzeitpunkt kann auf verschiedene Weisen ermittelt werden.

Gemäß einer Ausführungsform der Erfindung ist vorgesehen, den Startzeitpunkt in Abhängigkeit von einem Kontrast der aufgenommenen Bilder zu bestimmen. Zu Beginn der Aufnahme, wenn sich noch kein Fluoreszenzfarbstoff in dem untersuchten Objekt angereicht hat, wird ein Kontrast des aufgenommenen Fluoreszenzbildes nicht vorhanden bzw. gering sein. Mit zunehmender Anreicherung des Fluoreszenzfarbstoffes in dem Objekt nimmt der Kontrast zu und wird einen unteren Schwellenwert überschreiten. Der Zeitpunkt, zu dem der untere Schwellenwert überschritten wird, kann dann als der Startzeitpunkt gewählt werden.

Die Gruppe von Pixeln, deren akkumulierte Ladungsmenge in eine Binärzahl umgewandelt wird, kann ein einziges Pixel umfassen. Allerdings ist es auch möglich, daß die Gruppe von Pixeln mehrere Pixel umfaßt.

Gemäß einer Ausführungsform der Erfindung kann hierzu ein Bildsensor, beispielsweise ein CCD-Sensor verwendet werden, welcher bereits beim zeilenweisen Auslesen der Pixel die Ladungsmengen von jeweils vier benachbarten Pixeln zusammenführt und in jeweils eine Binärzahl umwandelt.

Gemäß einer weiteren Ausführungsform werden mehrere Binärzahlen, welche jeweils Ladungsmengen eines oder mehrerer Pixel repräsentieren, gemittelt, so daß aus mehreren Binärzahlen, welche somit ein Zwischenergebnis der Umwandlung darstellen, zu einer entgültigen Binärzahl zusammengeführt. Hierdurch läßt sich unter anderem eine Datenreduktion erreichen und ebenso ein darstellbares Bild, welches zwar im Vergleich zu der Pixelauflösung des Bildsensors eine reduzierte Auflösung aufweist, welches dafür allerdings im Hinblick auf sichtbares Bildrauschen reduziert ist und schließlich zu einem ansprechenderen Bild führt.

Als Fluoreszenzfarbstoff kann ein beliebiger Fluoreszenzfarbstoff bzw. Vorläufer desselben eingesetzt werden. Beispiele hierfür sind Indocyaningrün (ICG), dessen Anregungswellenlänge in einem Bereich von etwa 700 nm bis etwa 820 nm und dessen Fluoreszenzwellenlänge in einem Bereich von etwa 800 nm bis etwa 900 nm liegt. Ein weiteres Beispiel für einen Fluoreszenzfarbstoffvorläufer ist Aminolävulinsäure (5-ALA), welche zu einem Fluoreszenzstoff führt, dessen Anregungswellenlänge in einem Bereich von etwa 400 nm bis etwa 430 nm und dessen Fluoreszenzwellenlänge in einem Bereich von etwa 630 nm bis etwa 720 nm liegt.

Ausführungsformen der Erfindung werden nachfolgend anhand von Zeichnungen näher erläutert. Hierbei zeigt
- Figur 1: eine schematische Darstellung von Strahlengängen in einem Mikroskopiesystem gemäß einer Ausführungsform der vorliegenden Erfindung,
- Figur 2: ein schematisches Funktionsdiagramm eines Bildsensors und einer Ausleseelektronik, wie sie in dem in Figur 1 gezeigten Mikroskopiesystem eingesetzt sind,
- Figur 3: ein Flußdiagramm zur Erläuterung eines Bildaufnahmeverfahrens gemäß einer Ausführungsform der Erfindung, und
- Figur 4: ein Flußdiagramm zur Erläuterung eines Bildwiedergabeverfahrens.

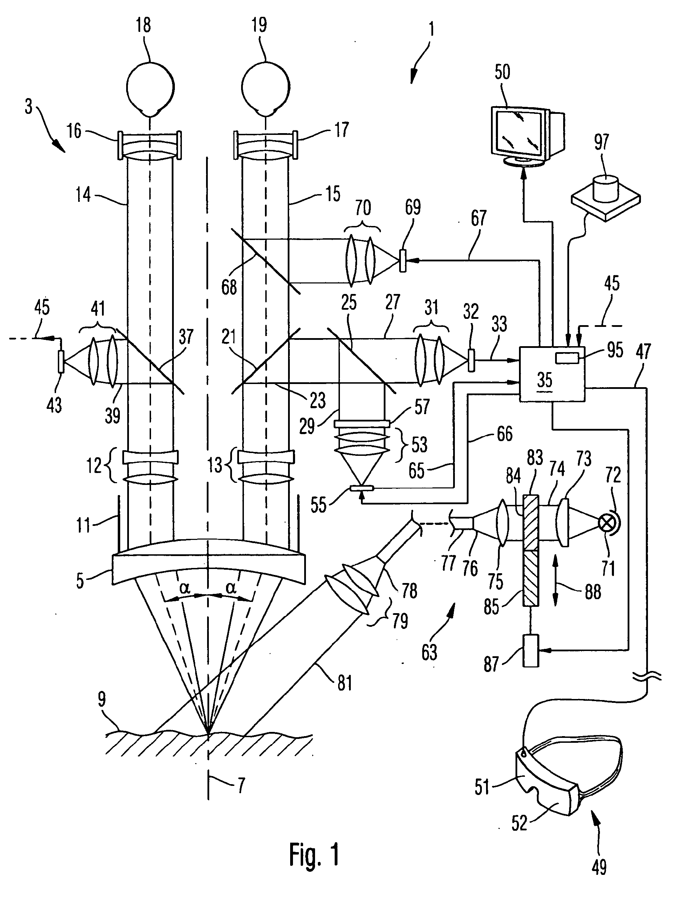

Ein in Figur 1 schematisch dargestelltes Mikroskopiesystem 1 umfaßt eine Mikroskopieoptik 3 mit einem Objektiv 5 mit einer optischen Achse 7. In einer Objektebene des Objektivs 5 ist ein zu untersuchendes Objekt 9 angeordnet. Von dem Objekt 9 ausgehendes Licht wird von dem Objektiv 5 in ein paralleles Strahlenbündel 11 überführt, in welchem zwei mit Abstand von der optischen Achse 7 angeordnete Zoomsysteme 12, 13 angeordnet sind und aus dem parallelen Strahlenbündel 11 jeweils ein Teilstrahlenbündel 14 und 15 herausgreifen und über in Figur 1 nicht dargestellte Umlenkprismen Okularen 16 und 17 zuführen, in welche ein Betrachter mit seinem linken Auge 18 bzw. rechten Auge 19 Einblick nimmt, um eine vergrößerte Darstellung des Objekts 9 als Bild wahrzunehmen. Hierbei entspricht das mit dem linken Auge 18 wahrgenommene Bild einem Bild bei Betrachtung unter einem Winkel α zur optischen Achse, und das von dem rechten Auge 19 wahrgenommene Bild entspricht einem Bild bei Betrachtung des Objekts 9 unter einem Winkel -α zur optischen Achse 7, so daß der Betrachter mit seinen beiden Augen 18, 19 insgesamt ein stereoskopisches Bild des Objekts 9 erhält.

In dem Teilstrahlenbündel 15 ist ein teildurchlässiger Spiegel 21 angeordnet, um einen Teil des Lichts als Strahl 23 auszukoppeln, welcher durch einen weiteren Strahlteiler 25 aufgeteilt wird in Strahlen 27 und 29. Der Strahl 27 wird über eine Kameraadapteroptik 31 auf eine lichtempfindliche Fläche einer Kamera 32 derart überführt, daß diese ein Bild des Objekts 9 bei Betrachtung unter dem Winkel -α zur optischen Achse 7 aufnimmt. Die von der Kamera 32 aufgenommenen Bilder werden als Bilddaten über eine Datenleitung 33 an eine Steuerung 35 übermittelt.

Aus dem Teilstrahl 14 koppelt ein teildurchlässiger Spiegel 37 einen Strahl 39 aus, welcher durch eine Kameraadapteroptik 41 auf eine lichtempfindliche Fläche einer weiteren Kamera 43 derart überführt wird, daß diese Bilder des Objekts 9 bei Betrachtung unter dem Winkel α zur optische Achse 7 aufnehmen kann. Die von der Kamera 43 aufgenommenen Bilder werden als Bilddaten über eine Datenleitung 45 der Steuerung 35 zugeführt. Die Steuerung 35 überträgt die von den Kameras 32, 43 aufgenommenen Bilder wiederum als Bilddaten über eine Leitung 47 an eine kopfgetragene Anzeigevorrichtung ("head mounted display") 49, welche von einem Benutzer des Mikroskopiesystems 1 wie eine Brille derart am Kopf getragen wird, daß in der Anzeigevorrichtung 49 integrierte Bildschirme, welche in Figur 1 schematisch mit 51 und 52 bezeichnet sind, von dem Benutzer mit dessen linkem bzw. dessen rechtem Auge betrachtet werden können.

Damit erhält der Benutzer, der nicht die Gelegenheit hat, direkt in die Okulare 16, 17 Einblick zu nehmen, über die Anzeigevorrichtung 49 ebenfalls einen stereoskopischen Eindruck von dem Objekt 9, und zwar durch Darstellungen, welche Bilder des Objekts 9 in sichtbarem Licht repräsentieren.

Der Strahl 29 wird über eine Kameraadapteroptik 53 auf eine Lichtdetektionsfläche einer Kamera 55 derart überführt, daß diese eine Fluoreszenz des Objekts aufnehmen kann. Hierzu ist in dem Strahl 29 vor der Kamera 55 ein Filter 57 angeordnet, welches auf die Fluoreszenzwellenlänge des eingesetzten Fluoreszenzfarbstoffes abgestimmt ist. In dem hier erläuterten Beispiel soll die Fluoreszenz des Fluoreszenzfarbstoffes ICG bei etwa 835 nm beobachtet werden. Entsprechend weist der Filter 57 eine Transmissionscharakteristik auf, wonach nur Licht oberhalb eines Schwellenwerts von etwa 810 nm transmittiert wird und Licht unterhalb des Schwellenwerts von 810 nm nicht transmittiert wird. Damit kann die Kamera 55 Bilder des Objekts 9 aufnehmen, welche eine Verteilung des Farbstoffs in dem Objekt 9 repräsentieren, sofern die Fluoreszenz des Farbstoffs durch ein nachfolgend beschriebenes Beleuchtungssystem 63 des Mikroskopiesystems 1 angeregt wird.

Die von der Kamera 55 aufgenommenen Bilder werden als Bilddaten über eine Datenleitung 65 an die Steuerung 35 übertragen. Die Steuerung 35 überträgt die von der Kamera 55 aufgenommenen Bilder wiederum als Bilddaten über eine Leitung 67 an eine LCD-Anzeige 69, welche die Bilddaten wiederum als Bild darstellt, welches über eine Kollimationsoptik 70 und einen Einkoppelspiegel 68 zur Überlagerung gebracht wird mit dem Teilstrahl 15, so daß das Bild der Anzeige 69 ebenfalls von dem Auge 19 des Benutzers in Überlagerung mit dem direkten optischen Abbild des Objekts 9 wahrnehmbar ist. Dabei stellt die LCD-Anzeige 69 das von der Kamera 55 im Infraroten aufgenommene Intensitätsbild beispielsweise in grüner Farbe dar. Hierbei wird Grün als Farbe für die Darstellung unter anderem deshalb gewählt, da das Objekt 9 als menschliches Gewebe im sichtbaren Bereich die Farbe grün nur in sehr geringem Umfang enthält.

Die Steuerung 35 bearbeitet ferner die an dem Bildschirm 51 der Anzeigevorrichtung 49 übertragenen Bilddaten derart, daß der Bildschirm 51 die von der Kamera 55 mit Infrarotlicht aufgenommenen Bilder in Überlagerung mit den Bildern darstellt, die die Kamera 32 mit sichtbarem Licht aufnimmt, so daß auch der Benutzer, der die Anzeige 49 am Kopf trägt, mit seinem rechten Auge ebenfalls eine überlagerte Darstellung der mit sichtbarem Licht aufgenommenen Bilder und der mit Infrarotlicht aufgenommenen Bilder erhält.

Obwohl dies in Figur 1 der Übersichtlichkeit halber nicht dargestellt ist, kann auch aus dem dem linken Auge 18 zugeführten Teilstrahlenbündel 14 ein Teilstrahl zur Überführung an eine Infrarotkamera ausgekoppelt werden, deren Bilder wiederum in das Teilstrahlenbündel als sichtbares Licht angekoppelt werden, ähnlich wie dies für das rechte Teilstrahlenbündel 15 mit der LCD-Anzeige 69, der Kollimationsoptik 70 und dem Einkoppelspiegel 68 bereits erläutert wurde. Dann erhält der Benutzer auch einen stereoskopischen Eindruck von dem Objekt 9 im Infrarotlicht. Die von einer solchen zusätzlichen Kamera aufgenommenen Bilddaten können dann ebenfalls an den Bildschirm 52 der Anzeige 49 übertragen werden, so daß auch der die Anzeige 49 tragende Benutzer einen stereoskopischen Eindruck von der Verteilung des Fluoreszenzfarbstoffs in dem Gewebebereich 9 erhält.

Das Beleuchtungssystem 63 umfaßt als Lichtquelle eine Halogenlampe 71, einen Reflektor 72 und einen Kollimator 73, um einen kollimierten Lichtstrahl 74 zu erzeugen, welcher mittels einer oder mehrerer Linsen 75 auf ein Eintrittsende 76 eines Glasfaserbündels 77 gerichtet wird, um von der Lampe 71 emittiertes Licht in das Glasfaserbündel 77 einzukoppeln. Durch das Glasfaserbündel 77 wird das Licht in die Nähe des Objektivs 5 transportiert, tritt dort an einem Austrittsende 78 des Glasfaserbündels 77 aus und wird dann durch eine Kollimationsoptik 79 zu einem auf das zu untersuchende Objekt 9 gerichteten Beleuchtungslichtstrahl 81 kollimiert. Anstatt der Halogenlampe kann auch jegliche andere Art von Lampe eingesetzt werden, beispielsweise eine Xenonlampe.

Das Beleuchtungssystem 63 umfaßt ferner eine Filterplatte 83, welche aus zwei nebeneinander angeordneten Filtern 84 und 85 zusammengesetzt ist und welche mittels eines von der Steuerung 35 angesteuerten Antriebs 87 in eine durch einen Pfeil 88 in Figur 1 angedeutete Richtung hin- und herverlagerbar ist, so daß in einer ersten Position der Platte 83 der Filter 84 in dem Strahl 74 angeordnet ist und in einer zweiten Position der Platte 83 der Filter 85 in dem Strahl 74 angeordnet ist.

Eine Transmissionscharakteristik des Filters 84 ist derart konfiguriert, daß der Filter 84 sichtbares Licht und Licht bis zu einer scharfen Kante bei etwa 800 nm recht gut transmittiert und oberhalb der Kante bei 800 nm Licht im wesentlichen nicht transmittiert. Der Filter 84 wird im Strahlengang 74 angeordnet, wenn die Fluoreszenz des Farbstoffs in dem untersuchten Gewebebereich 9 beobachtet werden soll. Die Kante liegt mit 800 nm nämlich höher als die Anregungswellenlänge 59 des Farbstoffs ICG, so daß mit dem Lichtstrahl 81 sowohl die Fluoreszenz angeregt wird, welche dann über die von der Kamera 55 aufgenommenen Bilder beobachtbar ist, als auch der Gewebebereich mit sichtbarem Licht beleuchtet wird, so daß dieser auch als Normallicht-Bild entweder durch Einblick in die Okulare 16, 17 oder durch Betrachtung der durch die Kameras 32, 43 aufgenommenen Bilder betrachtbar ist. Allerdings liegt die Kante mit 800 nm niedriger als die Emissionswellenlänge des Fluoreszenzfarbstoffs von 835 nm, so daß das Objekt nicht mit Fluoreszenzlicht beleuchtet wird und das durch die Kamera 55 detektierte Fluoreszenzlicht somit ausschließlich durch fluoreszierende Fluoreszenzfarbstoffe hervorgerufen wird.

Wenn die Fluoreszenz nicht beobachtet werden soll, wird durch die Steuerung 35 der Antrieb 87 betätigt, um den Filter 85 in den Strahl 74 zu schieben. Eine Transmissionscharakteristik des Filters 85 ist derart konfiguriert, daß der Filter 85 sichtbares Licht und Licht bis zu einer Kante bei etwa 710 nm recht gut transmittiert und Licht mit Wellenlängen oberhalb der Kante bei etwa 710 nm im wesentlichen nicht transmittiert. Der Filter 85 dient als Wärmeschutzfilter und eliminiert langwellige Strahlung aus dem Beleuchtungslichtstrahl 81, um das untersuchte Gewebe 9 vor einer unnötigen thermischen Belastung zu schützen. Die Kante bei etwa 710 nm liegt unterhalb der Anregungswellenlänge von 835 nm des Fluoreszenzfarbstoffs ICG, so daß die Fluoreszenz des Farbstoffs nicht wesentlich angeregt wird, wenn der Filter 85 in dem Strahl 74 angeordnet ist.

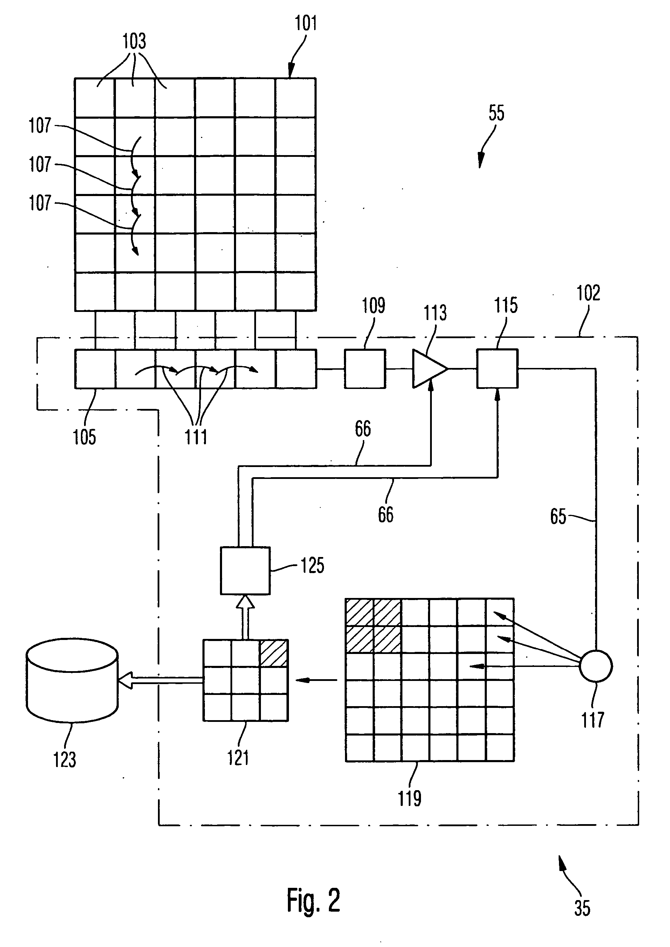

Figur 2 erläutert Funktionen der Kamera 55 und der Steuerung 35. Die Kamera 55 ist eine CCD-Kamera und umfaßt einen Bildsensor 101 mit einer Vielzahl von Pixeln 103, welche in Reihen und Spalten angeordnet sind. Eine Ausleseelektronik 102 dient zur Steuerung des Sensors 101 und zur Erzeugung von Bildern aus den Signalen des Sensors. Die Ausleseelektronik 102 umfaßt Komponenten, welche an der Kamera 55 angeordnet sind, und Komponenten, welche an der Steuerung 35 angeordnet sind.

Während der Belichtung werden in den Pixeln Ladungen akkumuliert. Am Ende einer Belichtung werden die in den einzelnen Pixeln akkumulierten Ladungen zeilenweise in ein Ausleseregister 105 übertragen, wie dies durch Pfeile 107 in Figur 2 angedeutet ist. Ist eine Zeile von Ladungen in das Register 105 übertragen, werden die einzelnen Ladungen der Reihe nach einer Ladung-Zu-Spannung-Umwandlungseinheit 109 zugeführt, wie dies durch Pfeile 111 in Figur 2 angedeutet ist. Die Ladung-Zu-Spannung-Umwandlungseinheit 109 wandelt die einzelnen Ladungen in entsprechende Spannungen um, welche in einem Verstärker 113 mit einstellbarem Gain verstärkt werden. Die verstärkten Spannungen werden einem Analog-Digital-Wandler mit ebenfalls einstellbarem Gain 115 zugeführt. Der Analog-Digital-Wandler 115 wandelt die Spannungen in Binärwerte um. In dem hier beschriebenen Beispiel erfolgt die Umwandlung in Binärwerte mit 8 Bit, das heißt es können kontinuierlich hellere Helligkeitswerte von 0 bis 254 erzeugt werden. Der Binärwert 255 repräsentiert einen Overflow, das heißt eine in einem Pixel akkumulierte Ladung, welche größer ist als eine Grenzladungsmenge. Die Grenzladungsmenge ist durch die Einstellungen des Gains des Verstärkers 113 und des Analog-Digital-Wandlers 115 gegeben. Zusammen bilden diese Gains einen Skalierungsfaktor für die Umwandlung von der Ladungsmenge eines Pixels in den Binärwert. Der Gesamtgain der Umwandlung kann definiert werden als die Anzahl der in dem Pixel akkumulierten Elektronen geteilt durch die Binärzahl, das heißt den Helligkeitswert des Pixels.

Die Binärzahlen werden über die Leitung 65 an die Steuerung 35 übertragen, welche einen Framegrabber 117 oder dergleichen aufweist, um die Binärzahlen in einem Zwischenbilddatenspeicher 119 abzuspeichern. Ein Prozessor der Steuerung 35 führt dann eine erste Bildverarbeitung dahingehend durch, daß die Datenmenge eines Bildes reduziert wird, indem ein Bilddatenspeicher 121 mit Bilddaten gefüllt wird, von denen ein jeder Datenwert eine Bildhelligkeit repräsentiert, welche aus einer Mittelung von vier entsprechenden Helligkeitswerten aus dem Bildspeicher 119 gewonnen wird. Hierbei ist es auch vorgesehen, daß eine stärkere Reduktion der Daten durchgeführt wird, indem beispielsweise ein Datenwert des Bildspeichers 121 aus einer Mittelung aus beispielsweise neun oder sechzehn Helligkeitswerten bzw. Pixeln des Speichers 119 errechnet wird.

Die Datenreduktion führt auch dazu, daß zu kleine Details und Bildrauschen die nachfolgenden Berechnungen nicht beeinflussen.

Die Bilddaten aus dem Speicher 121 werden nacheinander, das heißt Bild für Bild in ein Speichermedium, wie beispielsweise eine Festplatte 123 geschrieben. Für ein jedes Bild führt ein Bildanalysemodul 125, welches beispielsweise auch als Software implementiert sein kann, die auf einem Prozessor der Steuerung 35 läuft, eine Helligkeitsanalyse der in dem Speicher 121 gespeicherten Helligkeitswerte durch. Übersteigt einer der Helligkeitswerte einen Maximalwert, welcher in dem hier dargestellten Beispiel zu 250 gewählt wurde, so zeigt dies an, daß ein noch helleres nachfolgendes Bild den zur Verfügung stehenden Dynamikbereich der Binärdarstellung des Bildes überschreiten könnte. Das Analysemodul 125 reduziert sodann über Steuerleitungen 66 die Einstellung der Gains für den Verstärker 113 und den Analog-Digital-Wandler 115. Beispielsweise wird der Gain hierzu auf einen Wert von 95 % des momentan geltenden Gains eingestellt.

Da zu Beginn der Messung die Gains auf vorbestimmte Höchstwerte gesetzt waren, ist somit gewährleistet, daß bereits schwache Fluoreszenzerscheinungen in den Bildern den durch die Binärkodierung zur Verfügung stehenden Dynamikbereich möglichst weit ausschöpfen und daß dann mit zunehmend heller werdenden Fluoreszenzbildern die Gains so reduziert werden, daß ein Overflow in einzelnen Pixeln möglichst nicht entsteht.

Hierbei ist auch angenommen, daß die Fluoreszenzstrahlung in der Regel eine sehr niedrige Intensität aufweist, welche schwer nachzuweisen ist. Deswegen sind zu Beginn der Messung auch sämtliche Maßnahmen getroffen, um möglichst viel Fluoreszenzlicht auf die Kamera 55 treffen zu lassen.

Eventuell in der Optik vorhandene Blenden sind beispielsweise vollständig geöffnet. Ferner ist beispielsweise eine Belichtungszeit bzw. eine Shutterzeit der Kamera 55 auf einen vorbestimmten Wert eingestellt, welcher insbesondere ein zur Verfügung stehender Maximalwert ist.

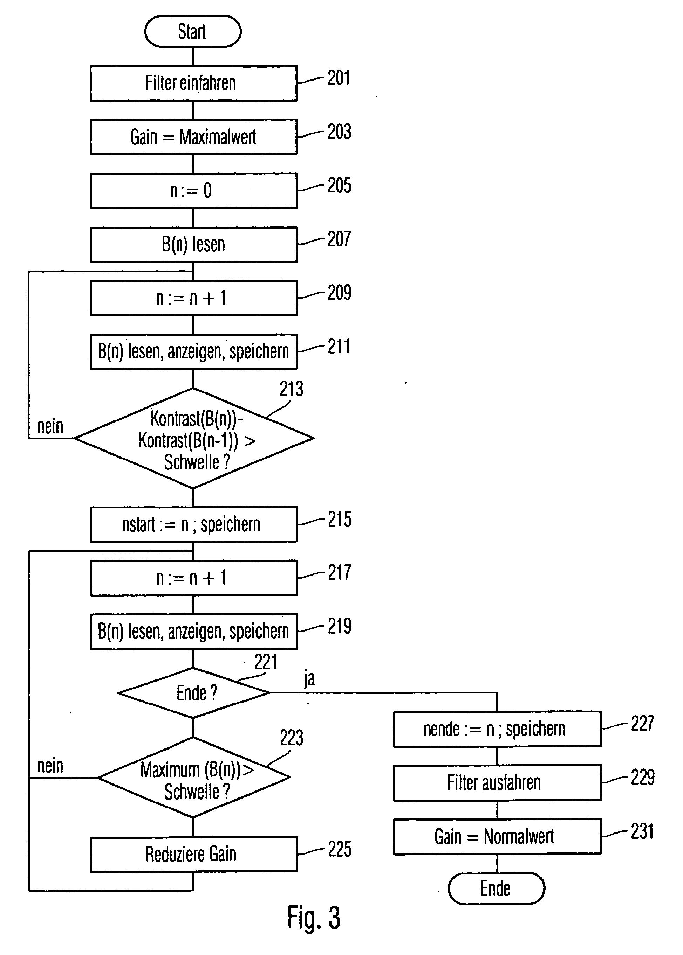

Anhand des in Figur 3 gezeigten Flußdiagramms wird eine Ausführungsform eines Aufnahmeverfahrens für eine Reihe von Fluoreszenzbildern nochmals erläutert. Die in Figur 3 dargestellte Prozedur wird gestartet, indem beispielsweise der Taster 97 (Figur 1) gedrückt wird. Sodann fährt die Steuerung in einem Schritt 201 den Filter 83 in den Strahlengang. In einem Schritt 203 werden die Gains des Verstärkers 113 und des Analog-Digital-Wandlers 115 auf jeweils ihre Maximalwerte eingestellt. Ein Bildzähler n wird in einem Schritt 205 zu Null gesetzt, und von der Kamera werden die Binärwerte bzw. Helligkeitswerte für ein Bild über die Leitung 65 ausgelesen und in den Bildspeicher 121 überführt (Schritt 207).

Sodann wird der Bildzähler in einem Schritt 209 inkrementiert, und in einem Schritt 211 wird ein nächstes Bild von der Kamera gelesen, auf der Festplatte 123 gespeichert und über die Displays 69 und 51 bzw. 52 dargestellt. In einem Schritt 213 wird festgestellt, ob bereits Fluoreszenzerscheinungen in dem Bild wahrnehmbar sind. Dies erfolgt dadurch, daß der Kontrast des aktuell aufgenommenen Bildes mit dem Kontrast des vorangehend aufgenommenen Bildes verglichen wird. Wird eine Zunahme des Kontrasts festgestellt, so läßt dies auf einen Beginn der Fluoreszenzerscheinung schließen. Falls dies nicht der Fall ist, wird die Bearbeitung mit dem Schritt 209 fortgesetzt, um wiederkehrend weitere Bilder aufzunehmen.

Der Kontrast in einem Bild kann beispielsweise dadurch ermittelt werden, daß der in dem Bild vorkommende kleinste Helligkeitswert von dem in dem Bild vorkommenden größten Helligkeitswert subtrahiert wird. Die entstehende Differenz ist dann kennzeichnend für den Kontrast.

Wird bei dem Vergleich in Schritt 213 eine Kontraständerung festgestellt, welche größer ist als ein vorbestimmter Schwellenwert, so wird auf den Beginn der Fluoreszenzerscheinung geschlossen, und die Verarbeitung wird bei einem Schritt 215 fortgesetzt, in welchem der aktuelle Wert des Bildzählers n als nstart gespeichert wird.

Sodann wird der Bildzähler n in einem Schritt 217 inkrementiert, es wird ein nächstes Bild in einem Schritt 219 gelesen, angezeigt und gespeichert. In einem Schritt 221 wird überprüft, ob die Verarbeitung beendet werden soll. Diese Überprüfung kann beispielsweise die Überprüfung im Hinblick auf eine Überschreitung einer vorbestimmten maximalen Zeitdauer, beispielsweise 300 Sekunden, beinhalten oder die Überprüfung kann auch den Zustand eines Bedienelementes, wie beispielsweise des Tasters 97, beinhalten, so daß ein Benutzer die Aufnahme von weiteren Bildern abbrechen kann.

Ferner ist es auch möglich, das Ende der Aufnahme in dem Schritt 221 über eine weitere Bildverarbeitung festzustellen. Beispielsweise kann eine Bildverarbeitung feststellen, daß die Fluoreszenz stark abgeklungen ist, indem größte Helligkeitswerte des Bildes einen geeignet gesetzten Schwellenwert unterschreiten.

Ist beabsichtigt, lediglich eine Zunahme einer Fluoreszenz in der Reihe von Bildern festzuhalten, so kann ein Ende der Aufnahme auch festgestellt werden, indem Helligkeiten aufeinanderfolgender Bilder miteinander verglichen werden. Wird eine Zunahme der Helligkeit nicht mehr festgestellt, so kann die Steuerung in dem Schritt 221 die Aufnahme beenden und die Verarbeitung bei dem Schritt 227 fortsetzen.

Ist das Ende der Bearbeitung nicht erreicht, wird in einem Schritt 223 überprüft, ob die Helligkeit eines Bildwertes einen Schwellenwert überschreitet. Im Zusammenhang mit der Erläuterung der Figur 2 wurde der Schwellenwert von 250 gewählt unter Berücksichtigung, daß eine größte Zahl, welche mit 8 Bit darstellbar ist, 255 ist. Ergibt die Überprüfung in dem Schritt 223, daß diese maximale Helligkeit noch nicht erreicht ist, wird die Bearbeitung bei dem Schritt 217 fortgesetzt, um weitere Bilder auszulesen, anzuzeigen und zu speichern. Andernfalls wird die Bearbeitung mit einem Schritt 225 fortgesetzt, in welchem die Gains für den Verstärker 113 und den Analog-Digital-Wandler 115 um 5 % reduziert werden. Sodann wird die Bearbeitung wieder mit dem Schritt 217 fortgesetzt, um weitere Bilder zu lesen, anzuzeigen und zu speichern und gegebenenfalls die Gains weiter zu reduzieren.

Ist das Ende der Bearbeitung in dem Schritt 221 erreicht, so wird die Bearbeitung bei einem Schritt 227 fortgesetzt, in welchem der Wert des Bildzählers als nende gespeichert wird. Sodann wird in einem Schritt 229 der Fluoreszenzfilter 83 aus dem Beleuchtungsstrahlengang entfernt, und es wird wieder der Wärmeschutzfilter 85 in den Beleuchtungsstrahlengang eingefahren. Abschließend werden in einem Schritt 231 die Gains des Verstärkers 113 und des Analog-Digital-Wandlers wieder auf Normalwerte gesetzt, wie sie bei einer üblichen Verwendung der Kamera eingesetzt werden.

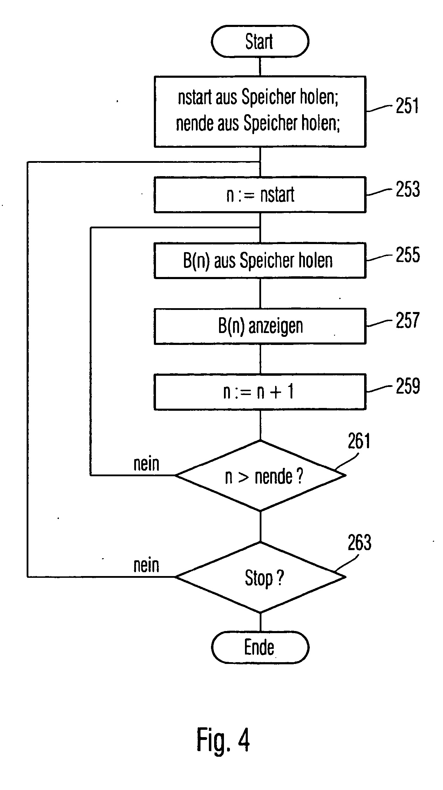

Anhand dem in Figur 4 gezeigten Flußdiagramm wird nun eine Prozedur zur Wiedergabe der aufgenommenen Fluoreszenzbilder erläutert.

Nach Start der Wiedergabe über ein Bedienelement der Steuerung 35 werden die in dem Speicher 123 gespeicherten Bilder über die Anzeige 69 und 49 oder auch auf einem an die Steuerung 35 angeschlossenen Monitor 50 wiedergegeben. Hierzu werden zunächst die Bildzähler nstart und nende, welche den Beginn und das Ende der Aufzeichnung repräsentieren, in einem Schritt 251 aus dem Speicher geholt. Sodann wird ein Bildzähler n in einem Schritt 253 auf den Startwert nstart gesetzt. In einem Schritt 255 wird das dem Zähler entsprechende Bild B(n) aus dem Speicher 123 geholt und in einem Schritt 257 auf den verschiedenen Anzeigen dargestellt. Sodann wird in einem Schritt 259 der Bildzähler inkrementiert. Hat der Bildzähler den Wert nende bei einer Überprüfung in einem Schritt 261 nicht erreicht, so wird die Bearbeitung bei dem Schritt 255 fortgesetzt, um weitere Bilder aus dem Speicher zu holen und darzustellen. Wird in dem Schritt 261 festgestellt, daß sämtliche Bilder dargestellt sind, so wird in einem Schritt 263 überprüft, ob ein Benutzer die Fortsetzung der Prozedur abgebrochen hat. Ist dies nicht der Fall, so wird die Bearbeitung bei dem Schritt 253 fortgesetzt, um die Darstellung der Reihe von Bildern erneut durchzuführen.

Neben der vorangehend beschriebenen Reduzierung des Gains sobald eine größte Bildhelligkeit den Schwellenwert überschreitet, ist es auch möglich, den Gain wieder zu erhöhen, sobald die größten Helligkeiten in den Bildern einen weiteren Schwellenwert unterschreiten. Hierdurch ist es möglich, auch bei Nachlassen der Fluoreszenzintensität weiterhin Bilder unter Ausschöpfung der zur Verfügung stehenden Dynamik aufzunehmen.

In dem Speicher können die Bilder in einem beliebigen Datenformat abgespeichert werden. Insbesondere ist es möglich, die Bilder in dem Speicher komprimiert abzulegen, wobei ein beliebiges Kompressionsverfahren eingesetzt werden kann, um die zu speichernde Datenmenge zu reduzieren. Beispielsweise kann ein MPEG-Verfahren zur Kompression der Videobilder eingesetzt werden, bei welchem nicht ein jedes einzelne Bild für sich abgespeichert wird sondern lediglich ein Teil der Bilder komplett gespeichert wird und die übrigen Bilder durch Speichern von Differenzwerten, Vorhersagewerten und Bewegungsvektoren und dergleichen so kodiert werden, daß sie aus den abgespeicherten Daten wieder rekonstruierbar sind. Hierbei ist klar, daß mit einer Kompression der Bilddaten auch eine gewisse Reduktion der Bildqualität einhergehen kann, diese wird in der Praxis allerdings nicht zu einer maßgeblichen Verschlechterung der Leistungsfähigkeit des beschriebenen Verfahrens führen.

Ferner ist es möglich, den bei der Bildaufnahme eingesetzten Gain bzw. einen den Gain repräsentierenden Wert zusammen mit den Bildern abzuspeichern oder Änderungen des Gains bzw. solche Gain-Änderungen repräsentierende Werte zusammen mit den Bildern abzuspeichern. Es ist dann möglich, den bei der Aufnahme verwendeten Gain bei der Wiedergabe zu berücksichtigen. Beispielsweise kann dann bei der Wiedergabe ein Bild, welches mit vergleichsweise hohem Gain aufgenommen wurde mit einer geringeren Helligkeit dargestellt werden als ein Bild, welches mit einem geringeren Gain aufgenommen wurde. Hierdurch ist es möglich, die mit der Zeit zunehmende Intensität einer Fluoreszenz für einen Betrachter deutlich wahrnehmbarer darzustellen. Hierbei kann es möglich sein, daß der Betrachter wahlweise zwischen einem Wiedergabemodus, in welchem die Anpassung der Helligkeit der dargestellten Bilder in Abhängigkeit von dem zusammen mit dem Bildern abgespeicherten Gain durchgeführt wird, und einem zweiten Wiedergabemodus zu wählen, in welchem die beschriebene Anpassung nicht durchgeführt wird und die Bilder im wesentlichen so wiedergegeben werden, wie sie abgespeichert wurden.

Zusammengefaßt wird bei einem Aufnahmeverfahren für eine Reihe von Fluoreszenzbildern wird ein Bildsensor und eine Ausleseelektronik für den Bildsensor eingesetzt. Der Bildsensor umfaßt eine Mehrzahl von Pixeln zur Akkumulation von durch einfallende Strahlung erzeugter Ladung, und die Ausleseelektronik wandelt die in den Pixeln akkumulierte Ladung in Binärzahlen um. Hierbei ist ein Gain der Ausleseelektronik einstellbar. Zu Beginn einer Untersuchung wird der Gain auf einen geeigneten Maximalwert eingestellt. Wird während der Untersuchung festgestellt, daß ein oder mehrere Helligkeitswerte eines aufgenommenen Bildes einen geeignet gewählten maximalen Helligkeitswert überschreiten, so wird der Gain reduziert.

## Patentansprüche

1. Mikroskopiesystem zur Sichtbarmachung einer Fluoreszenz, wobei das Mikroskopiesystem umfaßt:
einen Bildsensor (101) mit einer Mehrzahl von Pixeln (103) zur Akkumulation von durch einfallende Strahlung erzeugter Ladung, und
eine Mikroskopieoptik (3) mit einem ersten Strahlengang zur Abbildung eines Objektbereichs (9) auf die Pixel (103) des Bildsensors (101),
eine Ausleseelektronik (102) zur Umwandlung einer in jeweils Gruppen von Pixeln (103) akkumulierter Ladungsmenge in Binärzahlen, wobei wenigstens ein Gain (113, 115) der Umwandlung einstellbar ist, so daß die Binärzahlen jeweils Ladungsmengen aus Ladungsmengen-Bereichen repräsentieren, deren Ladungsmengen kleiner sind als eine von dem wenigstens einen Gain abhängige Grenzladungsmenge;
eine Steuerung (35), welche dazu konfiguriert ist,
den wenigstens einen Gain derart einzustellen, daß die Grenzladungsmenge eine kleine erste Ladungsmenge ist, und
sodann wiederholt:
Binärzahlen von der Ausleseelektronik (102) zu empfangen, welche ein durch den Bildsensor (101) detektiertes Bild repräsentieren, und
den wenigstens einen Gain derart neu einzustellen, daß die Grenzladungsmenge größer ist als bei der vorangehenden Einstellung des wenigstens einen Gain, falls wenigstens eine der das detektierte Bild repräsentierenden Binärzahlen eine Ladungsmenge repräsentiert, welche einen Maximalwert überschreitet.

2. Mikroskopiesystem nach Anspruch 1, ferner umfassend ein Aufzeichnungsmedium, wobei die Steuerung ferner dazu konfiguriert ist, die empfangenen Binärzahlen, welche das durch den Bildsensor detektierte Bild repräsentieren, in dem Aufzeichnungsmedium (123) zu speichern.

3. Mikroskopiesystem nach Anspruch 2, wobei die Steuerung ferner dazu konfiguriert ist, die Binärzahlen in dem Aufzeichnungsmedium erst ab einem Start-Zeitpunkt zu speichern.

4. Mikroskopiesystem nach einem der Ansprüche 1 bis 3, ferner umfassend eine Anzeige (69, 49) zur Darstellung der durch die Binärzahlen repräsentierten Bilder.

5. Mikroskopiesystem nach einem der Ansprüche 1 bis 4, wobei die Mikroskopieoptik (3) ferner einen zweiten Strahlengang mit wenigstens einem Okular (16, 17) umfaßt, um den Objektbereich (9) einem Auge eines Benutzers darzustellen.

6. Mikroskopiesystem nach einem der Ansprüche 1 bis 5, wobei der Bildsensor (101) einen CCD-Sensor oder einen CMOS-Sensor umfaßt.

7. Mikroskopiesystem nach einem der Ansprüche 1 bis 6, wobei die Auslese Elektronik einen Analog-Verstärker (113) umfaßt, und wobei der wenigstens eine Gain einen Gain des Analog-Verstärkers (113) umfaßt.

8. Mikroskopiesystem nach einem der Ansprüche 1 bis 7, wobei die Auslese Elektronik einen Analog-DigitalWandler (115) umfaßt, und wobei der wenigstens eine Gain einen Gain des Analog-Digital-Wandlers (115) umfaßt.

9. Aufnahmeverfahren für eine Reihe von Fluoreszenzbildern unter Verwendung eines Kamerasystems, wobei das Kamerasystem umfaßt:
einen Bildsensor mit einer Mehrzahl von Pixeln zur Akkumulation von durch einfallende Strahlung erzeugter Ladung, und
eine Ausleseelektronik zur Umwandlung einer in jeweils Gruppen von Pixeln akkumulierter Ladungsmenge in Binärzahlen, wobei wenigstens ein Gain der Umwandlung einstellbar ist, so daß die Binärzahlen jeweils Ladungsmengen aus Ladungsmengen-Bereichen repräsentieren, deren Ladungsmengen kleiner sind als eine von dem wenigstens einen Gain abhängige Grenzladungsmenge;
wobei das Verfahren umfaßt:
Einstellen des wenigstens einen Gain derart, daß die Grenzladungsmenge eine kleine erste Ladungsmenge ist, und
wobei das Verfahren sodann wiederholt umfaßt:
Empfangen von Binärzahlen, welche ein durch den Bildsensor detektiertes Bild repräsentieren, von der Ausleseelektronik,
Neu-Einstellen des wenigstens einen Gain derart, daß die Grenzladungsmenge größer ist als bei der vorangehenden Einstellung des wenigstens einen Gain, falls wenigstens eine der das detektierte Bild repräsentierenden Binärzahlen eine Ladungsmenge repräsentiert, welche einen Maximalwert überschreitet.

10. Aufnahmeverfahren nach Anspruch 9, wobei das Empfangen der Binärzahlen, welche das durch den Bildsensor detektiertes Bild repräsentieren, ein Speichern der Binärzahlen in einem Aufzeichnungsmedium umfaßt.

11. Aufnahmeverfahren nach Anspruch 10, wobei das Speichern der Binärzahlen in dem Aufzeichnungsmedium erst ab einem Start-Zeitpunkt erfolgt.

12. Aufnahmeverfahren nach Anspruch 10 oder 11, ferner umfassend:
Lesen der Binärzahlen von dem Aufzeichnungsmedium und
Darstellen der von den Binärzahlen repräsentierten Bilder.

13. Aufnahmeverfahren nach Anspruch 11, wobei das Speichern der Binärzahlen in dem Aufzeichnungsmedium ein Speichern einer ersten Markierung umfaßt, welche einen Startzeitpunkt repräsentiert, wobei das Darstellen nur für die Bilder erfolgt, welche nach dem Startzeitpunkt gespeichert wurden.

14. Aufnahmeverfahren nach einem der Ansprüche 11 bis 13, ferner umfassend:
Bestimmen des Startzeitpunkts in Abhängigkeit von einem Kontrast des von den Binärzahlen repräsentierten Bildes.

15. Aufnahmeverfahren nach einem der Ansprüche 9 bis 14, wobei die Gruppe von Pixeln ein einziges Pixel umfaßt.

16. Aufnahmeverfahren nach einem der Ansprüche 9 bis 15, ferner umfassend:
Verabreichen eines Fluoreszenzfarbstoffs oder eines Fluoreszenzfarbstoff-Precursors an ein Objekt, wobei die auf den Bildsensor einfallende Strahlung von dem Objekt ausgehende Fluoreszenzstrahlung umfaßt.

17. Aufnahmeverfahren nach Anspruch 16, wobei das Objekt eine biologische Probe außerhalb eines tierischen oder menschlichen Körpers ist.

18. Aufnahmeverfahren nach Anspruch 16, wobei das Objekt ein Teil eines tierischen oder menschlichen Körpers ist.

19. Mikroskopiesystem nach einem der Ansprüche 1 bis 8, wobei die Steuerung dazu konfiguriert ist, das Aufnahmeverfahren nach einem der Ansprüche 9 bis 18 auszuführen.

## Claims

1. A microscopy system for visualizing a fluorescence, wherein the microscopy system comprises:
an image sensor (101) having a plurality of pixels (103) for accumulating charges generated by incident radiation, and
microscopy optics (3) having a first beam path for imaging an object region (9) onto the pixels (103) of the image sensor (101);
readout electronics (102) for converting a charge amount, accumulated in a group of pixels (103), into binary numbers, wherein at least one gain (113, 115) of the conversion is adjustable such that each binary number represents a charge amount from within a range of charge amounts which are less than a charge amount limit which depends on the at least one gain;
a controller (35) which is configured
to adjust the at least one gain such that the charge amount limit is a small first charge amount, and
then repeatedly:
to receive binary numbers from the readout electronics (102), which binary numbers represent an image detected by the image sensor (101), and
to re-adjust the at least one gain such that the charge amount limit is greater than in the preceding adjustment of the at least one gain if at least one of the binary numbers, representing the detected image, represents a charge amount greater than a maximum value.

2. The microscopy system according to claim 1, further comprising a recording medium, wherein the controller is further configured to store the binary numbers representing the image detected by the image sensor in the recording medium (123).

3. The microscopy system according to claim 2, wherein the controller is further configured to store the binary numbers in the recording medium beginning at a start time.

4. The microscopy system according to any one of claims 1 to 3, further comprising a display (69, 49) for displaying the images represented by the binary numbers.

5. The microscopy system according to any one of claims 1 to 4, wherein the microscopy optics (3) comprises a second beam path comprising at least one ocular (16, 17) for displaying the object region (9) to an eye of a user.

6. The microscopy system according to any one of claims 1 to 5, wherein the image sensor (101) comprises one of a CCD sensor and a CMOS sensor.

7. The microscopy system according to any one of claims 1 6, wherein the readout electronics comprises an analog amplifier (113), and wherein the at least one gain is a gain of the analog amplifier (113).

8. The microscopy system according to any one of claims 1 to 7, wherein the readout electronics comprises an analog-digital-converter (115) and wherein the at least one gain is a gain of the analog digital converter (115).

9. A recording method for a series of fluorescence images using a camera system, wherein the camera system comprises:
an image sensor having a plurality of pixels for accumulating charges generated by incident radiation, and
readout electronics for converting a charge amount accumulated in a group of pixels into binary numbers, wherein at least one gain of the conversion is adjustable such that each binary number represents a charge amount from within a range of charge amounts less than a charge amount limit dependent on the at least one gain;
wherein the method comprises:
adjusting the at least one gain such that the charge amount limit is a small first charge amount, and
wherein the method then repeatedly comprises:
receiving binary numbers representing an image detected by the image sensor from the readout electronics, and
re-adjusting the at least one gain such that the charge amount limit is greater than in the preceding adjustment of the at least one gain if at least one of the binary numbers, representing the detected image, represents a charge amount greater than a maximum value.

10. The method according to claim 9, wherein the receiving of the binary numbers representing the image detected by the image sensor comprises storing of the binary numbers in the recording medium.

11. The method according to claim 10, wherein the binary numbers are stored in the recording medium beginning at a start time.

12. The recording method according to claim 10 or 11, further comprising:
receiving the binary numbers from the recording medium and
displaying the images represented by the binary numbers.

13. The recording method according to claim 11, wherein the storing of the binary numbers within the recording medium comprises storing of a first marker representing a start time, and wherein the displaying is performed only for images stored after the start time.

14. The recording method according to any one of claims 11 to 13, further comprising determining the start time in dependence of a contrast of the image represented by the binary numbers.

15. The recording method according to any one of claims 9 to 14, wherein the group of pixels comprises one single pixel.

16. The recording method according to any one of claims 9 to 15, further comprising
applying a fluorescent marker or a precursor of a fluorescent marker to an object, wherein the radiation incident on the image sensor comprises fluorescent radiation emanating from the object.

17. The recording method according to claim 16, wherein the object is a in vitro sample outside a living organism.

18. The recording method according to claim 16, wherein the object is a portion of an animal or human body.

19. The microscopy system according to any one of claims 1 to 8, wherein the controller is configured to perform the recording method according to any one of claims 9 to 18.

## Revendications

1. Système de microscopie permettant la visualisation d'une fluorescence, ledit système de microscopie comportant :
un capteur d'images (101) avec une pluralité de pixels (103) pour l'accumulation de la charge engendrée par un rayonnement incident, et
une optique (3) avec un premier chemin optique pour reproduire une zone d'objet (9) sur les pixels (103) du capteur d'images (101),
une électronique de lecture (102) pour transformer une quantité de charge accumulée dans chacun des groupes de pixels (103) en nombres binaires, au moins un gain (113, 115) de la transformation étant réglable, de telle sorte que les nombres binaires représentent respectivement des quantités de charge issues de zones de quantités de charge, dont les quantités de charge sont inférieures à une quantité de charge limite fonction dudit au moins un gain ;
une commande (35), qui est configurée,
pour régler ledit au moins un gain, de telle sorte que la quantité de charge limite est une première quantité de charge faible, et
ensuite de manière répétitive :
pour recevoir des nombres binaires de l'électronique de lecture (102), lesquels représentent une image détectée par le capteur d'images (101), et
pour effectuer un nouveau réglage dudit au moins un gain, de telle sorte que la quantité de charge limite est supérieure à celle du réglage précédent dudit au moins un gain, dans le cas où au moins un des nombres binaires représentant l'image détectée représente une quantité de charge qui est supérieure à une valeur maximale.

2. Système de microscopie selon la revendication 1, comprenant en outre un support d'enregistrement, la commande étant en outre configurée pour stocker dans le support d'enregistrement (123) les nombres binaires reçus, représentant l'image détectée par le capteur d'images.

3. Système de microscopie selon la revendication 2, dans lequel la commande est configurée en outre pour ne stocker les nombres binaires dans le support d'enregistrement qu'à partir d'un instant de démarrage.

4. Système de microscopie selon l'une quelconque des revendications 1 à 3, comprenant en outre un affichage (69, 49) pour afficher les images représentées par les nombres binaires.

5. Système de microscopie selon l'une quelconque des revendications 1 à 4, dans lequel l'optique (3) comprend en outre une deuxième chemin optique avec au moins un oculaire (16, 17) pour représenter la zone d'objet (9) à un oeil d'un utilisateur.

6. Système de microscopie selon l'une quelconque des revendications 1 à 5, dans lequel le capteur d'images (101) comprend un capteur de type CCD ou un capteur de type CMOS.

7. Système de microscopie selon l'une quelconque des revendications 1 à 6, dans lequel l'électronique de lecture comprend un amplificateur analogique (113), et dans lequel ledit au moins un gain comprend un gain de l'amplificateur analogique (113).

8. Système de microscopie selon l'une quelconque des revendications 1 à 7, dans lequel l'électronique de lecture comprend un convertisseur analogique-numérique (115) et dans lequel ledit au moins un gain comprend un gain du convertisseur analogique-numérique (115).

9. Procédé d'enregistrement pour une série d'images fluorescentes utilisant un système de caméra, selon lequel le système de caméra comprend :
un capteur d'images avec une pluralité de pixels pour l'accumulation de la charge engendrée par un rayonnement incident, et
une électronique de lecture pour transformer en nombres binaires une quantité de charge accumulée dans chacun des groupes de pixels, au moins un gain de la transformation étant réglable, de telle sorte que les nombres binaires représentent respectivement des quantités de charge issues de zones de quantité de charge dont les quantités de charge sont inférieures à une quantité de charge limite fonction dudit au moins un gain ;
le procédé comprenant :
le réglage dudit au moins un gain de telle sorte que la quantité de charge limite est une première quantité de charge faible, et
le procédé comprenant ensuite de manière répétitive :
la réception de nombres binaires depuis l'électronique de lecture, lesquels représentent une image détectée par le capteur d'images,
le nouveau réglage dudit au moins un gain, de telle sorte que la quantité de charge limite est supérieure à celle du réglage précédent dudit au moins un gain, dans le cas où au moins un des nombres binaires représentant l'image détectée représente une quantité de charge qui est supérieure à une valeur maximale.

10. Procédé d'enregistrement selon la revendication 9, selon lequel la réception des nombres binaires, représentant l'image détectée par le capteur d'images, comprend un stockage des nombres binaires dans un support d'enregistrement.

11. Procédé d'enregistrement selon la revendication 10, selon lequel le stockage des nombres binaires dans le support d'enregistrement n'est effectué qu'à partir d'un instant de démarrage.

12. Procédé d'enregistrement selon la revendication 10 ou 11, comprenant en outre :
la lecture des nombres binaires par le support d'enregistrement, et
l'affichage des images représentées par les nombres binaires.

13. Procédé d'enregistrement selon la revendication 11, selon lequel le stockage des nombres binaires dans le support d'enregistrement comprend un stockage d'un premier repère qui représente un instant de démarrage, l'affichage étant effectué seulement pour les images qui ont été stockées après l'instant de démarrage.

14. Procédé d'enregistrement selon l'une quelconque des revendications 11 à 13, comprenant en outre :
la détermination de l'instant de démarrage en fonction d'un contraste de l'image représentée par les nombres binaires.

15. Procédé d'enregistrement selon l'une quelconque des revendications 9 à 14, selon lequel le groupe de pixels comprend un seul pixel.

16. Procédé d'enregistrement selon l'une quelconque des revendications 9 à 15, comprenant en outre :
l'application d'un colorant fluorescente ou d'un précurseur de colorant fluorescente sur un objet, le rayonnement incident parvenant sur le capteur d'images comprenant le rayonnement fluorescent émanant de l'objet.

17. Procédé d'enregistrement selon la revendication 16, selon lequel l'objet est un échantillon biologique à l'extérieur d'un corps animal ou humain.

18. Procédé d'enregistrement selon la revendication 16, selon lequel l'objet est une partie d'un corps animal ou humain.

19. Système de microscopie selon l'une quelconque des revendications 1 à 8, dans lequel la commande est configurée pour la mise en oeuvre du procédé d'enregistrement selon l'une quelconque des revendications 9 à 18.
